# EUROPÄISCHE PATENTANMELDUNG

(11) **EP 1 513 214 A1**
(43) Veröffentlichungstag der Anmeldung: **09.03.2005**
(21) Anmeldenummer: 04405500.2
(22) Anmeldetag: 06.08.2004
(51) Int. Cl.: H01M 8/12, H01M 4/86

(54) **Hochtemperaturbrennstoffzelle mit stabilisierter Cermet-Struktur**

(30) Priorität: 05.09.2003 EP 03405649
(71) Anmelder: Sulzer Hexis AG, 8400 Winterthur (CH)
(72) Erfinder: Gilles, Robert, Dr., 8008 Zürich (CH); Kaiser, Andreas Franz-Josef, Dr., 8353 Elgg (CH); Batawi, Emad, Dr., 8400 Winterthur (CH)
(74) Vertreter: Sulzer Management AG

(57) **Zusammenfassung**

Die Hochtemperaturbrennstoffzelle umfasst eine brennstoffseitige Trägerstruktur (1), die eine Anodenschicht (1a) umfasst und die als Träger für eine dünne, gasdicht gesinterte Feststoff-Elektrolytschicht (2) dient. Diese Trägerstruktur ist durch eine heterogene Phase (1b) gebildet, in der Hohlräume in Form von Makro- sowie Mikroporen enthalten sind. Die heterogene Phase umfasst zwei Teilphasen, die sich verschränkend durchdringen. Die erste Teilphase besteht aus einem keramischen Material und die zweite Teilphase weist Metall auf, für das ein Redoxzyklus mit einem vollständigen Reduzieren und erneuten Oxidieren durchführbar ist. Die erste Teilphase setzt sich aus grossen und kleinen Keramikpartikeln (10, 11) zusammen, aus denen inselartig in der heterogenen Phase angeordnet formstabile "Klettenkorpuskeln" (12, 13) gebildet sind. Die zweite Teilphase stellt bei Vorliegen der reduzierten Form des Metalls eine elektrisch leitende Verbindung durch die Trägerstruktur her. Die grossen und kleinen Keramikpartikel haben mittlere Durchmesser d₅₀ grösser als 5 µm bzw. kleiner als 1 µm. Die Mengenanteile der Keramikpartikel sind derart gewählt, dass die "Klettenkorpuskeln" zu einem "Klettenhaftverbund" assoziiert sind, durch den die Trägerstruktur gegen Formänderungen stabilisiert ist. Durch diese Stabilisierung bleiben die metrischen Eigenschaften der Trägerstruktur an der Grenzfläche zur Elektrolytschicht weitgehend erhalten, so dass Volumenänderungen der zweiten Teilphase während des Redoxzyklus die Gasdichtheit der Elektrolytschicht weitgehend unversehrt lassen.

Für Hochtemperaturbrennstoffzellen, bei denen die Elektrolytschicht als Träger ausgebildet ist und die Anodenschicht auf diesen Träger aufgebracht ist, lässt sich die oben definierte heterogene Phase ebenfalls mit Vorteil verwenden.

## Beschreibung

Die Erfindung betrifft eine Hochtemperaturbrennstoffzelle mit einer brennstoffseitigen, eine Anodenschicht umfassenden Trägerstruktur gemäss Oberbegriff von Anspruch 1 sowie eine Hochtemperaturbrennstoffzelle mit einer als Träger ausgebildeten Elektrolytschicht, auf der die Anodenschicht aufgebracht ist. Die Erfindung betrifft auch Verfahren zum Herstellen derartiger Brennstoffzellen.

Aus der nicht vorveröffentlichten EP-A- 1 343 215 (= P.7183) ist eine SOFC-Brennstoffzelle mit einer brennstoffseitigen Trägerstruktur bekannt, die ein Anodensubstrat bildet und als Träger für einen dünnschichtigen Elektrolyten sowie eine Katode dient. Im Kontaktbereich zwischen der Anode, die eine dünne Teilschicht der Trägerstruktur ist, und dem Elektrolyten finden an sogenannten Dreiphasenpunkten (Nickel / Festelektrolyt / Gas) elektrochemische Reaktionen statt, bei denen Nickelatome durch Sauerstoffionen (O²⁻) des Elektrolyten oxidiert und diese durch einen gasförmigen Brennstoff (H₂, CO) wieder reduziert werden, wobei H₂O und CO₂ gebildet und die bei der Oxidation freigesetzten Elektronen vom Anodensubstrat weiter geleitet werden. Die EP-A- 1 343 215 beschreibt eine Trägerstruktur, die eine "Redoxstabilität" aufweist und die in Bezug auf diese Redoxstabilität, auf Gasdurchlässigkeit sowie Wirtschaftlichkeit für eine Verwendung in Hochtemperatur-Brennstoffzellen ausreichend gut ausgebildet ist.

Die Trägerstruktur dieser bekannten Brennstoffzelle ist aus einem Elektrodenmaterial aufgebaut und enthält Makroporen, die mittels Porenbildnern erzeugt sind und die kommunizierende Räume bilden. Das Elektrodenmaterial umfasst skelett- oder netzartige, zusammenhängende Gefüge aus durch Sintern verbundenen Partikeln, sogenannte "Retikularsysteme" (auch als perkolierende Phasen bezeichenbar), die zwei ineinander verschränkte Systeme bilden: ein erstes Retikularsystem aus keramischem Material und ein zweites Retikularsystem, das Metalle oder ein Metall - insbesondere Ni - enthält und das eine elektrisch leitende Verbindung durch die Trägerstruktur herstellt. Das Elektrodenmaterial hat die Eigenschaften, dass bei Durchführen von Redoxzyklen mittels Wechsel zwischen oxidierenden und reduzierenden Bedingungen erstens im keramischen Retikularsystem keine wesentlichen Eigenschaftsänderungen auftreten und zweitens im anderen Retikularsystem sich eine Oxidation bzw. Reduktion des Metalls ergibt. Ausserdem bilden die beiden Retikularsysteme zusammen ein dichtes Gefüge, das im oxidierten Zustand Mikroporen enthält, deren Anteil bezogen auf das Volumen des Elektrodenmaterials kleiner als 5 Vol-% ist oder sein kann.

Die beiden Retikularsysteme ergeben sich auf natürliche Weise aus den konstituierenden Partikeln in Form einer statistischen Verteilung der Partikel, wenn diese so präpariert sind, dass die beiden Partikelsorten jeweils ein schmales Grössenspektrum aufweisen, wenn der Anteil für jedes Retikularsystem mindestens rund 30 Vol-% beträgt und wenn die Partikel homogen miteinander vermischt sind. Das durch die Makroporen gebildete System von kommunizierenden Räumen ist ebenfalls ein Retikularsystem. Dieses Hohlraumsystem ergibt die notwendige Gasdurchlässigkeit.

Die beschriebene Trägerstruktur weist zwar die erwünschte Redoxstabilität auf, weist aber in anderer Hinsicht Mängel auf. Während eines Redoxzyklus zieht sich die Struktur beim Übergang vom oxidierten zum reduzierten Zustand zusammen (Konstriktion); die Elektrolytschicht wird entsprechend unter einen kompressiven Druck gesetzt. Der Kompression folgt beim umgekehrten Redox-Übergang eine Expansion. Diese Expansion ist wegen irreversiblen Prozessen in der Trägerstruktur in vielen Anodensubstraten um mehr als 0.1 % grösser als die Kompression. In der Elektrolytschicht, die eine gastrennende Membran darstellt, entstehen wegen der Expansion Risse, wodurch die notwendige Gasdichtheit verloren geht.

Aufgabe der Erfindung ist es, eine Hochtemperaturbrennstoffzelle mit einer brennstoffseitigen, eine Anodenschicht umfassenden Trägerstruktur zu schaffen, bei der die auf der Trägerstruktur aufgebrachte Elektrolytschicht während eines Redoxzyklus gasdicht bleibt. Diese Aufgabe wird durch die im Anspruch 1 definierte Brennstoffzelle gelöst.

Die Hochtemperaturbrennstoffzelle umfasst eine brennstoffseitige Trägerstruktur, die eine Anodenschicht umfasst und die als Träger für eine dünne, gasdicht gesinterte Feststoff-Elektrolytschicht dient. Diese Trägerstruktur ist durch eine heterogene Phase gebildet, in der Hohlräume in Form von Makro- sowie Mikroporen enthalten sind. Die heterogene Phase umfasst zwei Teilphasen, die sich verschränkend durchdringen. Die erste Teilphase besteht aus einem keramischen Material und die zweite Teilphase weist Metall auf, für das ein Redoxzyklus mit einem vollständigen Reduzieren und erneuten Oxidieren durchführbar ist. Die erste Teilphase setzt sich aus grossen und kleinen Keramikpartikeln zusammen, aus denen inselartig in der heterogenen Phase angeordnet formstabile "Klettenkorpuskeln" gebildet sind. Die zweite Teilphase stellt bei Vorliegen der reduzierten Form des Metalls eine elektrisch leitende Verbindung durch die Trägerstruktur her. Die grossen und kleinen Keramikpartikel haben mittlere Durchmesser d₅₀ grösser als 5 µm bzw. kleiner als 1 µm. Die Mengenanteile der Keramikpartikel sind derart gewählt, dass die "Klettenkorpuskeln" zu einem "Klettenhaftverbund" assoziiert sind, durch den die Trägerstruktur gegen Formänderungen stabilisiert ist. Durch diese Stabilisierung bleiben die metrischen Eigenschaften der Trägerstruktur an der Grenzfläche zur Elektrolytschicht weitgehend erhalten, so dass Volumenänderungen der zweiten Teilphase während des Redoxzyklus die Gasdichtheit der Elektrolytschicht weitgehend unversehrt lassen.

Der abhängige Anspruch 2 bezieht sich auf vorteilhafte Ausführungsformen der erfindungsgemässen Brennstoffzelle gemäss dem Anspruch 1.

Für Hochtemperaturbrennstoffzellen, bei denen die Elektrolytschicht als Träger ausgebildet ist und die Anodenschicht auf diesen Träger aufgebracht ist, lässt sich die heterogene Phase, wie sie in Anspruch 1 definiert ist, ebenfalls mit Vorteil gemäss Anspruch 3 verwenden. Die besondere Struktur dieser heterogenen Phase ist ein wirksames Mittel gegen zu grosse Scherkräfte, die aufgrund des Volumenunterschieds von reduziertem und oxidiertem Zustand des Anodenmaterials an der Grenzfläche zwischen der Anoden- und der Elektrolytschicht auftreten und die ein Delaminieren verursachen können.

Die abhängigen Ansprüche 4 bis 7 betreffen vorteilhafte Ausführungsformen der erfindungsgemässen Brennstoffzellen. Verfahren zum Herstellen der Brennstoffzellen sind Gegenstand der Ansprüche 8 und 9.

Nachfolgend wird die Erfindung anhand der Zeichnungen erläutert. Es zeigen:
- Fig. 1: eine erfindungsgemässe Brennstoffzelle in schematischer Darstellung,
- Fig. 2: eine Veranschaulichung eines als "Klettenkorpuskel" bezeichneten Gebildes,
- Fig. 3: eine Illustration zum Begriff "Klettenhaftverbund" und
- Fig. 4: ein Diagramm zur Konstriktion und Expansion einer Probe während eines Redoxzyklus.

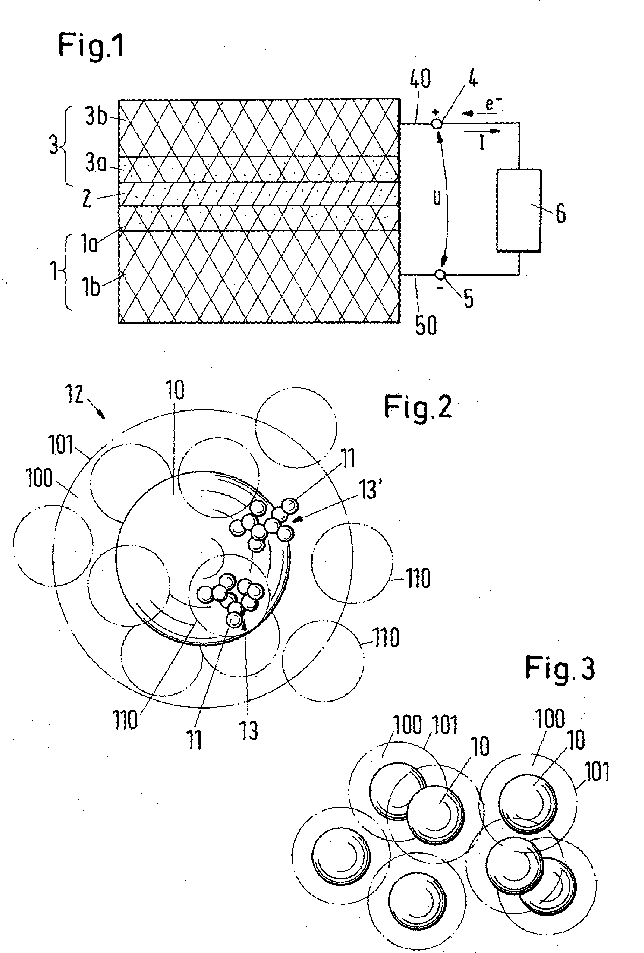

In einer Hochtemperatur-Brennstoffzelle, wie sie in Fig. 1 schematisch dargestellt ist, werden Elektrodenreaktionen zur Erzeugung eines elektrischen Stroms I durchgeführt: nämlich reduzierende Reaktionen in einer Anodenschicht 1a, die Teil einer Trägerstruktur 1 ist; und oxidierende Reaktionen auf einer Katode 3, die aus einer elektrochemisch aktiven Elektrodenschicht 3a und einer zweiten Teilschicht 3b aufgebaut ist. Ein grösserer Teil 1b der Trägerstruktur 1 ist durch poröse, gasdurchlässige Retikularsysteme gebildet. In der Anodenschicht 1a entstehen aus Wasserstoff und Kohlenmonoxid, die den gasförmigen Brennstoff bilden, Wasser bzw. Kohlendioxid. Auf der Katode 3 reagiert molekularer Sauerstoff eines zweiten Gasstroms (z. B. Luft) zu ionischem Sauerstoff O²⁻- unter Aufnahme von Elektronen e⁻ aus einem metallischen Leiter 40, der eine Verbindung zu einem Pol 4 herstellt. Die Sauerstoffionen bewegen sich durch einen Feststoffelektrolyten 2, der eine dünne, gasdicht gesinterte Elektrolytschicht bildet. Diese trennt die beiden Elektrodenschichten 1a und 3a gasdicht; sie ist bei Temperaturen über 700 °C für die Sauerstoffionen leitend. Es erfolgt die reduzierende Anodenreaktion mit den Sauerstoffionen unter Abgabe von Elektronen an einen weiteren metallischen Leiter 50, der eine Verbindung zu einem Pol 5 herstellt.

Zwischen den Polen 4 und 5 ist ein Verbraucher 6 angeordnet, der die Brennstoffzelle mit einem elektrischen Widerstand belastet. Die Spannung U zwischen den Polen 4 und 5 wird in der praktischen Anwendung der Brennstoffzelle durch einen Stapel von in Serie geschalteten Zellen erzeugt.

Die erfindungsgemässe Hochtemperaturbrennstoffzelle enthält brennstoffseitig die Trägerstruktur 1, die die Anodenschicht 1a und eine zweite, durch eine heterogene Phase 1b gebildete Teilschicht umfasst. Durch die Phase 1b werden Hohlräume in Form von Makro- sowie Mikroporen gebildet. Die Makroporen ergeben die Gasdurchlässigkeit der Trägerstruktur 1. Die heterogene Phase 1b enthält zwei Teilphasen, die sich verschränkend durchdringen. Die erste Teilphase besteht aus einem keramischen Material und die zweite Teilphase weist Metall auf, für das ein Redoxzyklus mit einem vollständigen Reduzieren und erneuten Oxidieren durchführbar ist. Die zweite Teilphase stellt bei Vorliegen der reduzierten Form des Metalls eine elektrisch leitende Verbindung durch die Trägerstruktur 1 her.

Die erste Teilphase setzt sich aus grossen und kleinen Keramikpartikeln 10 bzw. 11 zusammen, aus denen inselartig in der heterogenen Phase 1b angeordnet formstabile "Klettenkorpuskeln" 12 und 13 gebildet sind: siehe Fig. 2. Die grossen Keramikpartikel 10 haben mittlere Durchmesser d₅₀ grösser als 5 oder 10 µm; vorzugsweise ist dieser Durchmesser rund 20 µm. Für die kleinen Keramikpartikel 11 ist der mittlere Durchmesser d₅₀ kleiner als 1 µm.

Die zweite Teilphase bildet zusammen mit den kleinen Keramikpartikeln 11 der ersten Teilphase eine angenähert homogene Matrix. In dieser Matrix sind die grossen Keramikpartikel 10 gleichmässig verteilt eingebettet. Die Teilchendichte der kleinen Keramikpartikel 11 ist derart gewählt, dass Cluster von jeweils einer Vielzahl an Partikeln 11 auftreten. Beim Sintern der Trägerstruktur verbinden sich die Partikel 11 in den Clustern zu formstabilen Gebilden 13 oder 13'. Beim Sintern fügen sich überdies die einen dieser Gebilde, die Gebilde 13', mit den grossen Keramikpartikeln 10 zu "grossen Klettenkorpuskeln" 12 zusammen. Ein solches grosses Klettenkorpuskel 12 besteht aus einem Rumpf, der aus einem grossen Keramikpartikel 10 besteht, und einem Hof 100, in dem sich die angefügten Gebilde 13' befinden. Die mittlere Ausdehnung des Hofes 100 ist durch die strichpunktiert gezeichnete Kugel 101 in Fig. 2 angegeben. Je grösser die Teilchendichte der kleinen Keramikpartikel 11 gewählt ist, desto grösser ist der Durchmesser der Kugel 101. Dieser Durchmesser hängt auch von der Grösse der kleinen Keramikpartikeln 11 ab. Er hängt also von der Teilchendichte der kleinen Keramikpartikeln 11 sowie von den Durchmessern der grossen und kleinen Keramikpartikeln 10 bzw. 11 ab.

Ausser dem Klettenkorpuskel 12 sind in Fig. 2 auch kleine Kugeln 110 strichpunktiert eingezeichnet. Diese Kugeln sind den Gebilden 13 zugeordnet, die mit den grossen Keramikpartikeln 10 nicht verbunden sind. Die Durchmesser der Kugeln 110 wachsen ebenfalls mit zunehmender Teilchendichte der kleinen Keramikpartikel 11. Übersteigt diese Teilchendichte eine kritische Grösse, so verbinden sich die kleinen Keramikpartikel 11 zu einer perkolierenden Phase, in der sich die Kugeln 110 zu einem einzigen Verbund vereinigt haben. Die Teilchendichte der kleinen Keramikpartikel 11 sowie deren Grösse werden so gewählt, dass die Kugeln 110 markant kleinere Durchmesser als die Kugeln 101 aufweisen. Die zugeordneten Gebilde 13, die sich innerhalb der oben genannten Matrix befinden, werden nachfolgend als "kleine Klettenkorpuskeln" 13 bezeichnet.

Die Mengenanteile der Keramikpartikel werden derart gewählt, dass die Klettenkorpuskeln 12, 13 sich zu einem "Klettenhaftverbund" assoziieren, durch den die Trägerstruktur 1 gegen Formänderungen stabilisiert ist: siehe Fig. 3. Formänderungen können sich beim Reduzieren der zweiten Teilphase (zweites Retikularsystem) ergeben. Bei diesem Prozess, der mit einer Konstriktion verbunden ist, werden die Partikel, die anfänglich aus dem Metalloxid bestehen, beweglich. Sie ordnen sich neu an, wobei die makroskopische Form der Trägerstruktur 1 sich verändern kann. Eine solche Formänderung wird durch die Stabilisierung stark eingeschränkt. Diese ergibt sich durch ein Verhaken der Gebilde 13' in den Höfen 100, wenn die grossen Klettenkorpuskeln 12 so dicht angeordnet sind, dass Höfe 100 benachbarter Klettenkorpuskeln 12 sich überlappen. Die kleinen Klettenkorpuskeln 13 tragen ebenfalls durch ein Verhaken zur Haftung zwischen den grossen Klettenkorpuskeln 12 bei. Beim Reduzieren der zweiten Teilphase kann sich die Trägerstruktur dank des Klettenhaftverbunds nur sehr beschränkt zusammen ziehen. Die Klettenkorpuskel 12 und 13, die sich aufgrund von Verhakungen assoziieren, bilden einen Verbund, den Klettenhaftverbund, der bezüglich kleinen Dehnungen sehr flexibel ist und nur geringe Spannungen entstehen lässt. Die Elektrolytschicht, die relativ starr ist, wird daher durch die Trägerstruktur 1, in der die zweite Teilphase ein fluidartiges Verhalten während des Konstriktionsprozesses zeigt, nur mit schwachen Zugkräften beansprucht.

Auch beim Oxidieren wird die Trägerstruktur 1 durch den Klettenhaftverbund entsprechend stabilisiert. Durch diese Stabilisierung bleiben die metrischen Eigenschaften der Trägerstruktur 1 an der Grenzfläche zur Elektrolytschicht 2 weitgehend erhalten. Volumenänderungen der zweiten Teilphase während des Redoxzyklus lassen daher die Gasdichtheit der Elektrolytschicht unversehrt, so dass der Wirkungsgrad der Brennstoffzelle erhalten bleibt; oder die Gasdichtheit wird nur so weit beeinträchtigt, dass beim Wirkungsgrad eine tolerierbare Einbusse resultiert.

Zwischen der Anoden- und der Elektolytschicht entstehen auch Scherkräfte, wenn der Oxidationszustand des Anodenmaterials sich ändert. Aufgrund des Klettenhaftverbunds sind diese Scherkräfte relativ schwach. Im Fall, dass die Anodenschicht auf einer als Träger verwendeten Elektolytschicht aufgebracht ist, reichen solche Scherkräfte in der Regel nicht aus, eine Delaminierung der Anodenschicht zu verursachen.

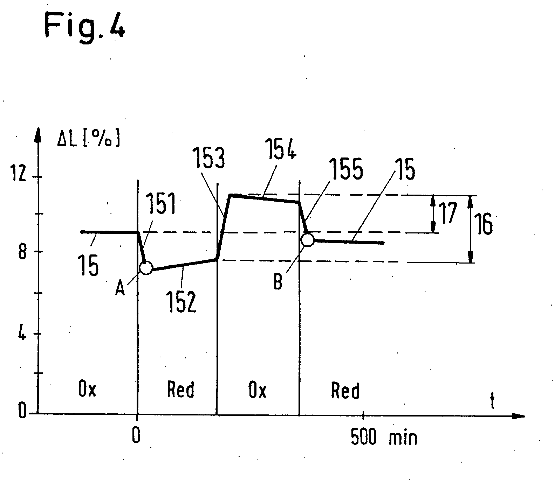

In Fig. 4 ist gezeigt, wie die lineare Ausdehnung L einer Probe - Kurve 15 - sich während eines Redoxzyklus ändert. Auf der Abszisse ist die Längenänderung ΔL angegeben, die am Anfang den Wert hat, der sich durch die Erwärmung auf die Betriebstemperatur der Brennstoffzelle von 800 °C und bei oxidierenden Bedingungen ergibt (im Ordinatenbereich "Ox"). Bei reduzierenden Bedingungen aufgrund einer Wasserstoffatmosphäre ergibt sich eine Konstriktion mit einer Längenabnahme auf dem Kurvenstück 151 bis zu einem Punkt A (im Ordinatenbereich "Red"). Bei diesem Punkt A ist das Metall der Probe reduziert. Anschliessend - Kurvenstück 152 - nimmt die Länge im reduzierten Zustand wieder etwas zu, wahrscheinlich aufgrund von Relaxationsvorgängen, bei denen elastische Spannungen abgebaut werden. Wird der Wasserstoff durch Luft ersetzt, so nimmt durch die Oxidation die lineare Ausdehnung L wieder zu (Kurvenstück 153) und zwar mehr, als zuvor bei der Reduktion die Länge abgenommen hat. Im oxidierten Zustand ergibt sich wieder eine kleine Längenänderung, möglicherweise auch aufgrund von Relaxationsphänomenen: Kurvenstück 154. Bei erneutem Reduzieren verkürzt sich die lineare Ausdehnung L wieder: Kurvenstück 155, Punkt B. Mit dem Punkt B ist der beim Punkt A begonnene Redoxzyklus abgeschlossen. Die beiden Punkte A und B müssten auf der gleichen Höhe liegen, falls während des Redoxzyklus nur reversible Prozesse auftreten würden. Wie in Fig. 5 ersichtlich ist, liegt eine irreversible Verlängerung vor.

Die aufgrund der Oxidation entstandenen Verlängerungen sind in Fig. 4 mit den Doppelpfeilen 16 und 17 dargestellt. Der Doppelpfeil 17 bezieht sich auf die irreversible Verlängerung, die mit einem Redoxzyklus verbunden ist. Für ein geeignetes Anodensubstrat müsste die irreversible Verlängerung 17 möglichst klein sein. Dieses Erfordernis ist ein zweckmässiges Kriterium bei der Suche nach geeigneten Zusammensetzungen. Eine Suche mit diesem Auswahlkriterium ist mit einer Vielzahl von Proben durchgeführt worden.

Das Anodensubstrat, das aus der heterogenen Phase 1 b besteht, enthält in der ersten Teilphase mit Y stabilisiertes Zirkoniumoxid YSZ und in der zweiten Teilphase Ni als Metall. Die zweite Teilphase besteht, wenn das Metall in oxidierter Form vorliegt, ganz oder weitgehend aus durch Sintern zusammengefügten NiO-Partikeln. Die Matrix zwischen den grossen Keramikpartikeln 10 hat bezüglich den NiO-Partikeln und kleinen Keramikpartikeln 11 eine heterogene Kornstruktur. Für untersuchte Proben, deren Zusammensetzungen sich als vorteilhaft erwiesen haben, ist das Korngrössenverhältnis der heterogenen Kornstruktur im Bereich zwischen 2:1 und 5:1; die NiO-Partikel haben dabei eine mittlere Korngrösse d₅₀ im Bereich von 0.5 bis 2 µm. Das Mengenverhältnis zwischen der ersten und der zweiten Teilphase liegt - in Gewichtsprozenten - im Bereich von 50:50 bis 25:75, vorzugsweise bei rund 40:60.

Bei einer besonders vorteilhaften Probe ist die Länge des Doppelpfeils 17 im Diagramm der Fig. 4 praktisch verschwunden. Diese Probe ist durch folgende Parameter charakterisiert: 60 Gew-% und d₅₀ = 0.74 µm für NiO; 40 Gew-% und d₅₀ = 0.2 bzw. 20 µm für YSZ mit zwei Teilen grobem YSZ und einem Teil feinem YSZ.

Ausserhalb der Anodenschicht 1a sind die Mikro- und Makroporen der Trägerstruktur 1 gleichmässig verteilt. Für die Makroporen beträgt der Volumenanteil 15 - 35, vorzugsweise mehr als 20 Vol-%; für die Mikroporen beträgt er vorzugsweise weniger als 10 Vol-%. Die mittleren Durchmesser der Makroporen haben Werte zwischen 3 und 25 µm, während jene der Mikroporen Werte zwischen 1 und 3 µm aufweisen. Die Trägerstruktur 1 hat eine Schichtdicke von 0.3 bis 2 mm, vorzugsweise 0.6 bis 1 mm. Die Dicke der Elektrolytschicht ist kleiner als 30 µm, vorzugsweise kleiner als 15 µm.

Bei einem Verfahren zum Herstellen der erfindungsgemässen Brennstoffzelle wird bei der Erzeugung eines Rohlings für die Trägerstruktur 1 das Metall der zweiten Teilphase in oxidierter Form verwendet. Das Material für den Festelektrolyten wird beispielsweise als Schlicker mittels einem Dünnschichtverfahren auf den genannten Rohling aufgebracht. Danach wird der beschichtete Rohling gesintert. Zur Erzeugung der Trägerstruktur 1 ist beispielsweise eines der folgenden Teilverfahren anwendbar: Foliengiessen, Rollpressen, Nasspressen oder isostatisches Pressen. Der Dünnschichtelektrolyt kann mittels anderer Verfahren aufgebracht werden: Siebdruck, Aufsprühen oder Giessen von Schlicker, Schlickerguss im Vakuum ("vacuum slip casting") oder reaktives Aufspritzen.

## Patentansprüche

1. Hochtemperaturbrennstoffzelle mit einer brennstoffseitigen, eine Anodenschicht (1a) umfassenden Trägerstruktur (1) als Träger für eine dünne, gasdicht gesinterte Feststoff-Elektrolytschicht (2), welche Trägerstruktur eine heterogene Phase (1b) und durch diese Phase gebildete Hohlräume in Form von Makro- sowie Mikroporen umfasst, wobei die heterogene Phase zwei Teilphasen enthält, die sich verschränkend durchdringen, die erste Teilphase aus einem keramischen Material besteht und die zweite Teilphase Metall aufweist, für das ein Redoxzyklus mit einem vollständigen Reduzieren und erneuten Oxidieren durchführbar ist, die erste Teilphase sich aus grossen und kleinen Keramikpartikeln (10, 11) zusammensetzt, aus denen inselartig in der heterogenen Phase angeordnet formstabile "Klettenkorpuskeln" (12, 13) gebildet sind, und die zweite Teilphase bei Vorliegen der reduzierten Form des Metalls eine elektrisch leitende Verbindung durch die Trägerstruktur herstellt,
**dadurch gekennzeichnet, dass** die grossen und kleinen Keramikpartikel mittlere Durchmesser d₅₀ grösser als 5 µm bzw. kleiner als 1 µm haben, die Mengenanteile der Keramikpartikel derart gewählt sind, dass die "Klettenkorpuskeln" zu einem "Klettenhaftverbund" assoziiert sind, durch den die Trägerstruktur gegen Formänderungen stabilisiert ist, wobei durch diese Stabilisierung die metrischen Eigenschaften der Trägerstruktur an der Grenzfläche zur Elektrolytschicht weitgehend erhalten bleiben, so dass Volumenänderungen der zweiten Teilphase während des Redoxzyklus die Gasdichtheit der Elektrolytschicht weitgehend unversehrt lassen.

2. Brennstoffzelle nach Anspruch 1, **dadurch gekennzeichnet, dass** die Trägerstruktur (1) eine Schichtdicke von 0.3 bis 2 mm, vorzugsweise 0.6 bis 1 mm aufweist, dass die Dicke der Elektrolytschicht (2) kleiner als 30 µm, vorzugsweise kleiner als 15 µm ist und dass ausserhalb der Anodenschicht die Mikro- und Makroporen der Trägerstruktur gleichmässig verteilt sind, wobei für die Makroporen der Volumenanteil 15 - 35, vorzugsweise mehr als 20 Vol-% beträgt, für die Mikroporen vorzugsweise weniger als 10 Vol-%, und die mittleren Durchmesser der Makroporen Werte zwischen 3 und 25 µm haben, während jene der Mikroporen Werte zwischen 1 und 3 µm aufweisen.

3. Hochtemperaturbrennstoffzelle mit einer Feststoff-Elektrolytschicht, die als Träger für Elektrodenschichten ausgebildet ist und die eine Anoden- von einer Katodenschicht gasdicht trennt, wobei die auf der Brennstoffseite aufgebrachte Anodenschicht eine heterogene Phase mit zwei Teilphasen bildet, die sich verschränkend durchdringen, die erste Teilphase aus einem keramischen Material besteht und die zweite Teilphase Metall aufweist, für das ein Redoxzyklus mit einem vollständigen Reduzieren und erneuten Oxidieren durchführbar ist, die erste Teilphase sich aus grossen und kleinen Keramikpartikeln (10, 11) zusammensetzt, aus denen inselartig in der heterogenen Phase angeordnet formstabile "Klettenkorpuskeln" (12, 13) gebildet sind, und die zweite Teilphase bei Vorliegen der reduzierten Form des Metalls eine elektrisch leitende Verbindung durch die Trägerstruktur herstellt,
**dadurch gekennzeichnet, dass** die grossen und kleinen Keramikpartikel mittlere Durchmesser d₅₀ grösser als 5 µm bzw. kleiner als 1 µm haben, die Mengenanteile der Keramikpartikel derart gewählt sind, dass die "Klettenkorpuskeln" zu einem "Klettenhaftverbund" assoziiert sind, durch den die Anodenschicht gegen Formänderungen stabilisiert ist, wobei durch diese Stabilisierung die metrischen Eigenschaften der Anodenschicht an der Grenzfläche zur Elektrolytschicht weitgehend erhalten bleiben und so nur schwache Scherkräfte entstehen, die kein Delaminieren der Anodenschicht verursachen.

4. Brennstoffzelle nach einem der Ansprüche 1 bis 3, **dadurch gekennzeichnet, dass** die zweite Teilphase zusammen mit den kleinen Keramikpartikeln (11) der ersten Teilphase eine angenähert homogene Matrix bilden, in welche die grossen Keramikpartikel (10) gleichmässig verteilt eingebettet sind und dabei in Verbindung mit einem Teil der kleinen Keramikpartikeln grosse "Klettenkorpuskeln" (12) formen, während kleine "Klettenkorpuskeln" (13), die sich lediglich aus kleinen Keramikpartikeln zusammensetzen, sich innerhalb der Matrix befinden.

5. Brennstoffzelle nach Anspruch 4, **dadurch gekennzeichnet, dass** die erste Teilphase aus mit Y stabilisiertem Zirkoniumoxid YSZ, aus dotiertem Ceroxid, aus einem Perowskit oder einem anderen keramischen Material besteht, und die zweite Teilphase Ni als Metall enthält, dem beispielsweise Cu zulegiert ist.

6. Brennstoffzelle nach Anspruch 5, **dadurch gekennzeichnet, dass** die zweite Teilphase bei Vorliegen der oxidierten Form des Metalls ganz oder weitgehend aus durch Sintern zusammengefügten NiO-Partikeln besteht.

7. Brennstoffzelle nach einem der Ansprüche 5 oder 6, **dadurch gekennzeichnet, dass** das Mengenverhältnis zwischen der ersten und der zweiten Teilphase - in Gewichtsprozenten - im Bereich von 50:50 bis 25:75, vorzugsweise bei rund 40:60 liegt.

8. Verfahren zum Herstellen einer Brennstoffzelle gemäss einem der Ansprüche 1 bis 7, **dadurch gekennzeichnet, dass** für die Erzeugung der als Träger benutzen Schicht eines der folgenden Teilverfahren angewendet wird: Schlickerguss, Foliengiessen, Rollpressen, Nasspressen oder isostatisches Pressen.

9. Verfahren zum Herstellen einer Brennstoffzelle gemäss Anspruch 1 oder 2, **dadurch gekennzeichnet, dass** bei der Erzeugung eines Rohlings für die Trägerstruktur (1), auf welcher der Feststoff-Elektrolytschicht (2) mittels einem Dünnschichtverfahren, beispielsweise mittels Siebdruck schlickerförmig aufgebracht wird, das Metall der zweiten Teilphase in oxidierter Form verwendet wird und dass der Rohling zusammen mit dem aufgetragenen Elektrolytmaterial gesintert wird.
